# FASCICULE DE BREVET EUROPEEN

(11) **EP 2 231 318 B1**
(45) Date de publication et mention de la délivrance du brevet: **24.05.2017**
(21) Numéro de dépôt: 08872243.4
(22) Date de dépôt: 14.11.2008
(51) Int. Cl.: B01J 8/00, G01F 23/28, B65G 69/04

(54) **DISPOSITIF ET PROCEDE POUR LE CHARGEMENT DE PARTICULES SOLIDES DANS UNE ENCEINTE**
VORRICHTUNG UND VERFAHREN ZUM LADEN VON FESTPARTIKELN IN EINE KAMMER
DEVICE AND METHOD FOR LOADING SOLID PARTICLES INTO A CHAMBER

(30) Priorité: 15.11.2007 FR 0708014
(43) Date de publication de la demande: 29.09.2010
(73) Titulaire: Total Raffinage France, 92400 Courbevoie (FR)
(72) Inventeur: COTTARD, Bernard, F-76430 Saint Romain de Colbosc (FR); LEROY, Pascal, F-76600 Le Havre (FR)
(74) Mandataire: Largeau, Béatrice
(86) Numéro de dépôt international: PCT/FR2008/001602
(87) Numéro de publication internationale: WO 2009/098372

(56) Documents cités:
- EP-A- 0 727 250
- WO-A-2008/047050
- FR-A- 2 454 603
- FR-A- 2 872 497
- JP-A- 10 043 576
- US-A- 5 753 585
- US-A1- 2004 031 335
- US-A1- 2006 201 245

## Description

La présente invention concerne le domaine du chargement de particules solides dans tout type d'enceintes, notamment des réacteurs industriels, et en particulier chimiques. Elle concerne plus précisément un dispositif, un procédé et leurs utilisations pour charger une enceinte, en particulier un réacteur chimique avec un solide divisé, notamment avec un catalyseur.

L'invention se rapporte plus particulièrement à un dispositif et à un procédé pour le chargement des réacteurs, notamment les réacteurs à lit fixe de type chimique, électrochimique, pétrolier ou pétrochimique, avec des particules solides, en particulier à l'état divisé.

Les particules peuvent se présenter sous forme de billes, de grains, de cylindres, de pastilles, de bâtonnets, ou d'autres formes, et sont généralement de faible taille. Elles peuvent être des tamis moléculaires, des grains de catalyseurs solides, qui se présentent généralement sous formes d'extrudés de type mono- ou multilobes, dont la taille peut varier de quelques dixièmes de millimètres à quelques centimètres.

De nombreux dispositifs destinés au remplissage de particules solides dans une enceinte, notamment un réacteur chimique ou pétrochimique, sont connus et décrits dans l'art.

Ces dispositifs et leurs procédés associés tentent de répondre à de nombreux critères de qualité, tels que la vitesse de chargement, l'homogénéité, la densité dudit chargement et, bien évidemment, ils doivent permettre un chargement conforme aux règles de sécurité en direction des opérateurs et des biens.

Le temps de chargement est un paramètre important dans le remplissage des enceintes. En effet, plus un réacteur, par exemple intégré dans une unité de traitement d'un produit hydrocarboné, est chargé rapidement, plus le temps d'immobilisation de l'unité concernée dans le procédé de fabrication est diminué, permettant ainsi un redémarrage plus rapide. Ce facteur est primordial dans la mesure où le coût d'immobilisation peut être très important.

Il est d'autre part indispensable que le lit de particules solides chargé, encore appelé « lit catalytique », présente une bonne homogénéité.

L'homogénéité est améliorée par un chargement dans lequel le « front de remplissage », appelé aussi « profil de chargement », c'est-à-dire l'interface entre la partie supérieure du lit catalytique et la partie non encore remplie du réacteur, présente un profil le plus proche de l'horizontale, voire horizontal. Ceci pour permettre d'obtenir une répartition des particules très régulière dans le lit catalytique.

Le respect de ce critère de qualité du chargement est très important, voire indispensable, afin de favoriser un écoulement du fluide à traiter et une cinétique réactionnelle constants et réguliers dans l'ensemble du volume du lit catalytique et ainsi permettre une amélioration de l'utilisation du catalyseur, par exemple en limitant, voire en évitant, que des chemins privilégiés ne se créent, et ainsi que toute la masse catalytique ne soit pas utilisée de manière homogène.

Un autre facteur d'importance dans le domaine du chargement des réacteurs concerne la densité de chargement. De manière générale, nonobstant par exemple les phénomènes de pertes de charges, la densité de particules présente dans le réacteur est proportionnelle à l'efficacité de la réaction chimique.

Cette densité est définie à partir de la quantité de masse catalytique chargée dans l'enceinte et de la hauteur (correspondant bien entendu à un volume) du lit catalytique. La hauteur est habituellement mesurée par un opérateur et nécessite en général un arrêt du chargement afin que l'opérateur puisse mesurer ladite hauteur, par l'intermédiaire par exemple d'un fil à plomb, dans une atmosphère généralement poussiéreuse.

Plusieurs des dispositifs et procédés de chargement existants, notamment ceux dits à « effet de pluie », peuvent se révéler insuffisants en termes de rapidité et/ou de qualité de remplissage, notamment en s'éloignant plus ou moins de l'horizontalité du front de remplissage.

Les différents dispositifs connus ne permettent pas, en général, la mesure rapide, voire en continu, de l'évolution du remplissage et/ou ne tiennent pas compte de la géométrie interne de l'enceinte. En effet, l'intérieur de l'enceinte à remplir peut comprendre des « irrégularités », comme des doigts de thermocouples positionnés à différents niveaux du lit catalytique, lesdits thermocouples étant destinés à mesurer les températures internes dudit lit à plusieurs niveaux du réacteur.

Ces irrégularités peuvent se comporter comme des obstacles à la bonne répartition des particules solides constituant le lit catalytique et nécessiter des réglages spécifiques ponctuels des dispositifs de chargement afin de contourner lesdits obstacles, notamment pour obtenir un chargement dont le front de remplissage est le plus proche possible de l'horizontale.

D'autres dispositifs de chargement faisant appel à une manche d'alimentation, descendue et suspendue à l'intérieur du réacteur, peuvent présenter des dangers importants pour les opérateurs, notamment en cas de décrochement ou de déchirure, quand ces derniers se trouvent en fond du réacteur pour orienter la manche en charge de particules afin de piloter ledit chargement.

C'est ainsi que pour obtenir une qualité optimale de chargement, la Demanderesse a proposé plusieurs dispositifs et procédés associés pour le remplissage d'enceintes, notamment de grandes tailles, avec des particules solides, par exemple dans la demande de brevet européen EP 0 007 854 et ses améliorations divulguées dans les demandes EP 0 116 246 et EP 0 769 462.

Plus récemment, la Demanderesse a proposé, afin d'améliorer encore les caractéristiques du chargement des enceintes de grandes tailles avec des particules solides, un nouveau type de dispositif décrit dans la demande de brevet FR 2 872 497 et qui consiste en un système de répartition desdites particules équipé d'un arbre central creux.

Cependant et malgré les récentes améliorations apportées au dispositif, il peut subsister un certain nombre d'inconvénients, dus par exemple à un dysfonctionnement du dispositif en cours de chargement ou à une perturbation extérieure.

Ces inconvénients sont par exemple :
- une homogénéité insuffisante des particules dans le lit catalytique, pouvant présenter notamment un « défaut » d'horizontalité du front de remplissage,
- une densité non-conforme, et en particulier inférieure, à la densité souhaitée,
- un temps de chargement anormalement élevé, et/ou
- de trop nombreuses interventions humaines pendant le chargement.

En plus, la Demanderesse, au cours de ses recherches dans le domaine, a mis en évidence un certain nombre de besoins pour accroître l'efficacité de tels chargements, et notamment :
- de disposer d'une meilleure mesure de la hauteur du lit catalytique en cours de chargement par l'augmentation de la fréquence et de la précision des mesures,
- une amélioration du suivi de l'état de la surface du profil de chargement avec prise en compte et remèdes associés aux éventuels défauts de pentes et/ou de planéité dudit profil de chargement,
- une automatisation améliorée du chargement permettant en particulier d'intervenir directement en temps réel sur le dispositif à partir de la prise en compte des paramètres ci-dessus énoncés, afin de diminuer encore le temps de chargement tout en réduisant les interventions humaines à leur strict minimum.

Ces inconvénients et besoins d'amélioration de l'efficacité du chargement sont d'autant plus marqués lorsque le remplissage est effectué avec des particules créant pendant le chargement une grande perturbation optique. Par « grande perturbation optique », on entend au sens de la présente invention que les conditions ne permettent pas une visualisation optique correcte et/ou immédiate de l'état du front de remplissage. Cette perturbation optique est généralement due à la présence de nombreuses poussières qui se forment au niveau du dispositif de chargement, par exemple à partir des grains de catalyseur dans un réacteur chimique, poussières qui sont présentes en quantités plus ou moins importantes suivant le type de catalyseur à charger.

Des solutions ont été proposées pour améliorer le contrôle en continu du chargement d'une enceinte par des particules solides.

Par exemple, la demande de brevet japonais JP 7-242337 divulgue un procédé et un dispositif de suivi du remplissage d'une enceinte (réacteur) par un catalyseur granulaire. Le dispositif décrit comprend un moyen de remplissage, situé au centre de la partie supérieure de l'enceinte, répandant une pluie de grains de catalyseur, ainsi qu'un dispositif émetteur d'un rayon laser balayant la surface du front de remplissage et un moyen détectant le rayon laser émis par le dispositif émetteur et réfléchi par la surface du front de charge.

Les dispositifs émetteur et détecteur sont fixés sur la paroi de l'enceinte, à hauteur du moyen de remplissage. Ce système présente l'inconvénient d'être assez difficile et long à installer à l'intérieur de l'enceinte à remplir, augmentant ainsi de manière indésirable la période d'inactivité du réacteur.

Par ailleurs, ce système comportant un moyen de mesure télémétrique à hauteur du moyen de remplissage ne peut pas fonctionner correctement, ou ne peut pas fonctionner du tout, avec le dispositif de chargement dense décrit dans FR 2 872 497. En effet, la présence des déflecteurs en rotation entre le front de remplissage et le système de mesure télémétrique perturberait les mesures au laser, notamment en fin de chargement.

En plus, la technologie de mesure laser n'est pas performante, voire inadaptée, dans un environnement poussiéreux tel que celui du chargement d'un réacteur par des grains de catalyseur.

Il subsiste ainsi un besoin pour un dispositif de remplissage permettant de résoudre en tout ou partie les problèmes évoqués ci-dessus, et qui permette :
- d'effectuer des mesures automatisées de la hauteur et/ou de l'état du front de remplissage du lit catalytique à une fréquence élevée, notamment sans arrêt ou pendant un arrêt bref du chargement,
- de réaliser ces mesures avec précision, par exemple sur la hauteur centrale du lit catalytique, ainsi que sur le profil de chargement dudit lit, tout au moins sur une grande partie, sans être dépendant de la quantité de poussières générées pendant le chargement,
- d'effectuer ces mesures sans intervention humaine dans l'enceinte,
- d'automatiser le chargement de l'enceinte, par exemple à partir des résultats desdites mesures afin de minimiser les interventions humaines dangereuses, et
- de remplir l'enceinte de manière automatique par des particules solides d'une façon homogène et précise tout en définissant précisément la densité du chargement par une meilleure connaissance des paramètres dudit chargement.

Au cours de ses nombreux travaux de recherche, la Demanderesse a mis au point un nouveau dispositif qui peut notamment utiliser le système de chargement dense (Densicat^{®}) divulgué dans FR 2 872 497, avec une grande facilité de mise en place et de fonctionnement. La présente invention permet d'automatiser et/ou d'améliorer le chargement d'un réacteur par un meilleur suivi de la hauteur du lit catalytique en cours de chargement et/ou de l'état de la surface du front de remplissage.

La présence de systèmes automatisés intervenant sur les paramètres de réglages du dispositif peut permettre une diminution des interventions humaines en cours de chargement et notamment des interventions humaines dangereuses à l'intérieur du réacteur.

Selon un premier aspect, la présente invention a pour objet un dispositif de chargement de particules solides dans une enceinte selon la revendication1. Le dispositif selon l'invention peut être indépendant de l'enceinte à charger, et notamment amovible. Ceci a pour avantage de permettre le chargement successif de plusieurs enceintes avec un seul dispositif.

Il comprend au moins un moyen d'alimentation permettant d'alimenter en particules solides, notamment du haut vers le bas, le moyen de dispersion.

Ce moyen d'alimentation peut comprendre en amont au moins une vanne de sectionnement, en particulier automatisée. Il peut être par exemple alimenté par au moins une trémie, notamment équipée d'une vanne de sectionnement. Le moyen d'alimentation peut entourer partiellement ou totalement l'arbre central du moyen de dispersion, en particulier un arbre central tel que défini ci-dessous.

Le moyen d'alimentation peut être pourvu d'au moins un moyen de fermetures, notamment automatisé. En particulier, ce moyen de fermeture peut être de type obturateur, par exemple des volets, dont les déplacements peuvent être réalisés par des vérins ou de tout moyen connu dans la technique, qui peuvent être commandés à distance.

Ces moyens de fermeture sont destinés à obstruer de manière automatique, totalement ou partiellement, au moins un orifice ou au moins un groupe d'orifices d'évacuation des particules solides, notamment disposés au-dessus du moyen de dispersion.

Ces moyens de fermeture peuvent ainsi permettre de commander le débit en particules des orifices d'évacuation, durant l'opération de chargement de l'enceinte, et plus particulièrement pendant la dispersion des particules.

La gestion des flux des particules solides ou des grains de catalyseur arrivant sur le moyen de dispersion peut être ainsi contrôlée, notamment afin de pouvoir agir sur le profil de chargement. En effet, le contrôle du débit de chaque évacuation qui influe sur la dispersion des particules peut permettre, avec certains réglages, de créer ou de remédier à des irrégularités, comme des creux et des bosses. Plus particulièrement, le contrôle maîtrisé permet d'obtenir un profil de chargement conforme au profil de consigne désiré, c'est à dire généralement plat et horizontal.

Selon un mode de réalisation particulier, le moyen de dispersion comprend un arbre central, éventuellement creux, sur lequel sont attachés des déflecteurs de type lanière, de préférence semi-rigides. Ledit arbre est entraîné en rotation par un moyen d'entraînement qui peut être un moteur, par exemple excentré par rapport à l'arbre, alimenté par un gaz, de préférence choisi parmi l'azote et l'air.

L'axe de rotation de l'arbre central qui peut tourner à une vitesse allant de 10 à 300 tours par minute et de préférence de 40 à 200 tours par minutes, est généralement parallèle à l'axe longitudinal du réacteur. Cependant, cet axe de rotation peut être décalé de manière automatisée par rapport audit axe de l'enceinte par l'intermédiaire d'au moins un vérin automatisé, en particulier pendant le chargement ou pendant un arrêt de celui-ci. Le décalage peut être d'un angle allant jusqu'à 45°, notamment jusqu'à 30°, par rapport à l'axe longitudinal de l'enceinte, afin de corriger d'éventuels défauts de planéité.

L'arbre central du moyen de dispersion est généralement positionné sur l'axe longitudinal de l'enceinte, mais il peut être déplacé, par exemple automatiquement par l'intermédiaire d'au moins un vérin automatisé, pendant le chargement ou lors d'un arrêt de celui-ci parallèlement à cet axe, d'une distance allant jusqu'à 50 cm, et en particulier allant jusqu'à 20 cm de la position de l'axe longitudinal de l'enceinte.

Les variations de positions de l'arbre central associées aux variations de sa vitesse de rotation, peuvent permettre de modifier la répartition des particules dans l'enceinte.

Le dispositif de chargement peut comprendre un système automatisé de contrôle comprenant des vérins permettant notamment des actions automatisées de modifications des paramètres de réglages du moyen d'alimentation et/ou du moyen de dispersion, en particulier selon les données des mesures de la hauteur et/ou de l'analyse du front de remplissage du lit catalytique en cours de chargement.

Le dispositif comprend plusieurs moyens de mesure permettant de déterminer la hauteur du lit de particules en cours de chargement.

Par « mesure permettant de déterminer la hauteur du lit de particules » on entend au sens de la présente invention, la distance mesurée entre le moyen de mesure (ou le plateau supérieur interne d'un réacteur chimique le plus proche du moyen de mesure) et un ou plusieurs points, par exemple de 2 à plusieurs dizaines de points, compris dans une zone centrale définie sur le front de remplissage.

On calcule ensuite à partir de ces distances mesurées, la hauteur entre ces mêmes points mesurés et le sol ou l'extrémité inférieure du lit pour en déduire dans ce dernier cas, la hauteur du lit de particules en cours de chargement ou, in fine, chargé.

Le moyen de mesure peut être choisi dans le domaine des émissions électromagnétiques ou acoustiques, par exemple de type radars et/ou sonars, ou toute technique connue dans l'art et permettant une mesure de distance instantanée et précise dans un milieu hostile, notamment poussiéreux.

En particulier, le moyen de mesure de la hauteur de remplissage est disposé en tout ou partie au-dessus ou au-dessous du moyen de dispersion, et en particulier des lanières dans le cas du dispositif décrit dans FR 2 872 497, et notamment au-dessous de celles-ci. Quand il est disposé en dessous des moyens de dispersion, le moyen de mesure peut être disposé en tout ou partie à l'intérieur du tube creux fixe de l'arbre central du dispositif. Les moyens de mesure de la hauteur du lit de remplissage sont pourvus d'au moins un moyen de déplacement permettant au moyen de mesure, par l'intermédiaire d'un moyen de liaison, d'être soit logé dans le tube creux fixe situé dans l'arbre creux rotatif, soit de sortir en partie ou totalement dudit tube creux, en particulier pour pouvoir prendre des mesures. Les moyens de mesure de la hauteur du lit de remplissage ne sont généralement pas rendus solidaires de l'arbre creux en rotation, mais l'invention peut s'appliquer dans le cas contraire, en particulier avec un programme informatique adapté à l'exploitation des mesures.

Les radars peuvent présenter un temps de mesure inférieur ou égal à 1 minute, en particulier inférieur ou égal à 10 secondes, voire inférieur ou égal à 1 seconde. Les radars peuvent présenter un diamètre extérieur inférieur ou égal à 200 mm, et notamment inférieur ou égal à 130 mm.

Leur hauteur peut être inférieure ou égale à 1000 mm, et en particulier inférieure ou égale à 500 mm.

Les radars peuvent présenter un angle de cône d'émission de 22°, notamment de 8°, voire de 4°.

Tout particulièrement, le radar peut être du type Vegapuls 68 ou Vegapuls 67 commercialisé par la société VEGA, ayant un angle de cône d'émission d'environ 8°.

Les sonars peuvent présenter un diamètre inférieur ou égal à 50 mm ou inférieur ou égal à 20 mm, voire inférieur ou égal à 16 mm.

Leur hauteur peut être inférieure ou égale à 40 mm, voire inférieure ou égale à 12 mm et ils peuvent avoir un angle de cône d'émission des ondes de 8°.

En particulier le(s) sonar(s) utilisé(s) peu(ven)t être des sonars commercialisés par la société Alctra.

Le dispositif peut comprendre également au moins des moyens permettant de mesurer le profil de chargement, notamment du même type que le moyen de mesure de la hauteur du lit de remplissage. En particulier le même moyen permet de déterminer la mesure de la hauteur du lit de particules et la mesure du profil de chargement.

Par « au moins un moyen permettant de mesurer le profil de chargement», on entend au sens de la présente invention un moyen permettant de mesurer la distance entre le moyen de mesure et un certain nombre de points répartis sensiblement sur toute la surface du front de chargement et permettant d'obtenir une représentation en deux ou trois dimensions de la surface du front de remplissage.

Le moyen de mesure du profil de chargement peut permettre des mesures en différents points répartis sur toute le diamètre (2D) ou sur toute la surface (3D) du lit de particules solides, soit parce qu'il est apte à prendre des mesures simultanées dans plusieurs directions, notamment à partir de plusieurs moyens de mesures, notamment des émetteurs-détecteurs, disposés par exemple sur un demi volume de sphère, soit parce qu'il est mobile et peut prendre des mesures séquentielles de différents points ou zones du front de remplissage en effectuant un mouvement contrôlé.

En particulier, le moyen de mesure du profil de chargement permet de mesurer la hauteur d'au moins 1 point pour chaque unité de surface du front de remplissage. L'unité de surface peut être inférieure ou égale à 0,2 m², notamment inférieure ou égale à 0,1 m², en particulier inférieure ou égale à 0,05 m², voire inférieure ou égale à 0,01 m².

Le moyen de mesure de la hauteur du lit de remplissage et/ou du profil de chargement peut tout particulièrement mesurer en une seule mesure les hauteurs d'un ensemble de points d'une surface, et ainsi permettre l'obtention d'une représentation en 3 dimensions.

Selon un premier mode de réalisation, le moyen de mesure de la hauteur du lit de remplissage et/ou du profil de chargement est positionné sur l'axe longitudinal de l'enceinte et/ou de l'arbre central.

Selon un deuxième mode de réalisation, l'axe du moyen de mesure de la hauteur du lit de remplissage et/ou du profil de chargement peut être différent de l'axe longitudinal de l'enceinte et/ou de l'arbre central.

En particulier, le moyen de mesure peut être équipé d'au moins un moyen moteur angulaire permettant de faire varier l'angle de mesure. L'angle de mesure peut être un angle allant jusqu'à 30°, en particulier d'un angle allant jusqu'à 45°, voire d'un angle allant jusqu'à 60°, tout particulièrement d'un angle allant jusqu'à 80° par rapport à l'axe longitudinal de l'enceinte.

Tout particulièrement, dans le cas où au moins un moyen moteur angulaire est présent, il peut permettre d'augmenter les angles de mesure lorsque la hauteur du lit de remplissage augmente.

Le dispositif peut comprendre plusieurs moyens de mesure du profil de chargement. En particulier, ces moyens de mesure peuvent présenter un axe de mesure différent, par exemple pour permettre de mesurer plusieurs surfaces en même temps. Tout particulièrement, ces moyens sont positionnés sur un rayon suivant une courbe, notamment circulaire. Ceci peut notamment permettre de mesurer le profil de chargement en faisant tourner les différents moyens de mesure.

Les moyens de mesure de la hauteur du lit de remplissage et/ou du profil de chargement peuvent être munis de moyens moteurs angulaire et/ou rotatoires permettant à ces moyens de mesure d'effectuer un mouvement de rotation défini, en particulier de se déplacer d'un angle de rotation déterminé.

Les moyens de mesure du profil de chargement peuvent effectuer des mouvements de rotation contrôlés, en particulier dans un plan horizontal ou dans les trois dimensions.

Encore plus particulièrement, les moyens de mesure peuvent être positionnés de manière à permettre de mesurer les hauteurs sur tout le profil de chargement du lit catalytique de l'enceinte, en particulier en « une fois ». Les moyens de mesure peuvent alors être disposés selon des angles permettant des mesures sur toute la surface du front de chargement, en particulier ils peuvent être disposés selon une forme sphéroïdale, cylindrique ou selon toute forme géométrique adaptée.

Le ou les moyens de mesure de la hauteur du lit de remplissage et le ou les moyens de mesure du profil de chargement peuvent permettre des mesures d'une précision inférieure à 10 cm, en particulier inférieure à 1 cm.

Les mesures du profil de chargement peuvent notamment être effectuées depuis le début du remplissage, jusqu'à une hauteur du lit de remplissage de quelques dizaines de cm par rapport au(x) moyen(s) de mesures, c'est-à-dire quand l'enceinte est considérée pleine de particules solides.

En particulier, le ou les moyens de mesure de la hauteur du lit de remplissage et/ou du profil de chargement, permettent d'effectuer des mesures dans des conditions de visibilités réduites, notamment dans une atmosphère poussiéreuse, voire très poussiéreuse, et/ou comportant des vapeurs de différentes natures.

Selon un mode de réalisation particulier, le dispositif comprend des moyens de comparaison du profil de chargement souhaité et du profil de chargement mesuré. Ces moyens de comparaison peuvent notamment être mis en oeuvre par ordinateur.

Tout particulièrement, le profil de chargement souhaité est horizontal. Cependant, l'intérieur de l'enceinte à remplir peut présenter des éléments susceptibles de perturber la dispersion et/ou la disposition des particules pendant le chargement et donc l'horizontalité du profil de chargement, notamment la présence de doigts de thermocouples à l'intérieur de l'enceinte comme évoquée précédemment.

En particulier, le profil souhaité est issu d'un modèle théorique, voire mathématique, de remplissage de l'enceinte, d'un modèle expérimental, ou d'un modèle mixte expérimental et théorique.

Selon la hauteur calculée du lit de particules dans l'enceinte à partir d'au moins une mesure de la hauteur de remplissage et le résultat de la comparaison du profil de chargement mesuré avec le profil de chargement souhaité ou théorique et en tenant compte du modèle mathématique traduisant la forme intérieure de l'enceinte, il peut être utile de modifier les paramètres de réglage du moyen de dispersion, par exemple son sens de rotation, afin d'obtenir un profil de chargement le plus proche possible du profil de chargement souhaité.

Le dispositif selon la présente invention peut permettre une modification automatisée des paramètres de remplissage et/ou de dispersion notamment via :
- le réglage des moyens de dispersion, comme le sens de rotation et la vitesse de rotation des déflecteurs,
- le débit du chargement, qui peut notamment être régulé par l'intermédiaire d'au moins une vanne de sectionnement du débit d'alimentation,
- le positionnement de l'arbre creux, notamment par le décalage de l'axe de l'arbre creux par rapport à l'axe longitudinal et/ou de symétrie de l'enceinte et/ou de l'axe vertical,
- l'inclinaison du moyen de dispersion par rapport à l'axe longitudinal de l'enceinte, notamment par une inclinaison de quelques degrés, et/ou
- le réglage des différents flux en particules sur les déflecteurs, notamment via l'ouverture partielle ou totale des orifices d'évacuations ou groupes d'orifices d'évacuation inférieures et/ou latérales.

Selon un mode de réalisation particulier, les mesures sont réalisées pendant quelques secondes, notamment quelques dixièmes de seconde et en particulier sans arrêt du chargement, entraînant de facto et en temps réel des éventuelles modifications sur les paramètres, évoqués ci-dessus, des différents moyens liés au dispositif de chargement. Bien évidemment, ces mesures peuvent également être réalisées pendant un arrêt de chargement avec prise en compte différée des modifications automatiques des paramètres de réglage du dispositif de chargement.

Selon un autre de ses aspects, l'invention a pour objet un procédé de chargement de particules solides dans une enceinte dans lequel
- lesdites particules circulent du haut vers le bas
- la hauteur du lit de particules et le profil de chargement du lit de particules sont mesurés, notamment en continu et/ou de manière intermittente en cours de chargement,
- les paramètres de chargement sont ajustés, notamment selon la hauteur du lit de remplissage et/ou du profil de chargement.

En particulier, le résultat des mesures est comparé avec au moins un modèle déterminé, et tout particulièrement, les éventuels écarts constatés par des actions commandées et automatiques sur les différents paramètres de réglages du dispositif de chargement sont réduits.

Le procédé utilise, en particulier un dispositif tel que décrit dans le présent document.

La mesure nécessite l'arrêt du chargement pendant moins de 10 minutes, notamment moins de 5 minutes, en particulier moins d'une minute, et de préférence ne nécessite pas l'arrêt du chargement.

Les paramètres de chargement, du moyen d'alimentation et/ou du moyen de dispersion sont ajustés en fonction des résultats des mesures de la hauteur du lit de particules et/ou du profil de chargement, en particulier par rapport à un modèle prenant en compte les caractéristiques géométriques intérieures de l'enceinte à charger. Plus spécialement, ces comparaisons et ajustements sont automatiques et contrôlés par un ordinateur qui donne des ordres à des moyens mécaniques motorisés.

Le moyen de mesure du profil de chargement peut mesurer la hauteur d'au moins 1 point pour chaque unité de surface représentant moins de 20 % et de préférence moins de 10% de la surface totale.

Selon un autre de ses aspects, l'invention a encore pour objet l'utilisation du dispositif selon l'invention ou du procédé selon l'invention, pour effectuer le chargement d'au moins un lit catalytique dans un réacteur chimique d'hydrotraitement des hydrocarbures.

L'invention est maintenant décrite en référence aux figures, non limitatives, dans lesquelles :
- la figure 1 est une vue en coupe transversale d'une enceinte catalytique dont un lit de catalyseur est en cours de chargement,
- la figure 2 est une vue partielle en coupe transversale d'un dispositif selon un mode de réalisation de l'invention,
- la figure 3 est une vue partielle en coupe transversale d'un dispositif selon un autre mode de réalisation de l'invention, et
- la figure 4 est une vue en coupe transversale d'un moyen de mesure équipé d'un radar permettant des mesures de la surface du front de chargement.

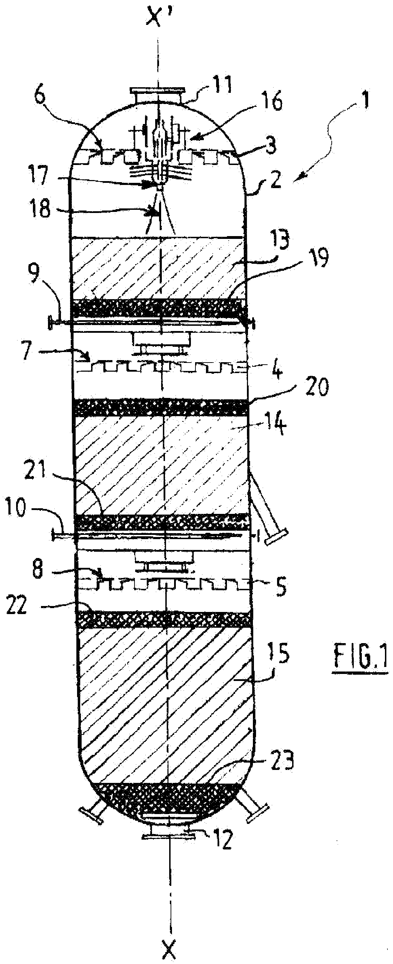

La figure 1 présente une enceinte catalytique (1) constituée de trois lits habituellement chargés en particules solides telles des grains de catalyseur. Cette enceinte, dénommée réacteur dans la profession, comprend une paroi extérieure (2), des plateaux de distribution de la charge à traiter constitués de plusieurs cheminées (3, 4, 5), eux-mêmes surmontés de plateaux pour la pré-distribution de la charge (6, 7, 8) et des plateaux supports du lit catalytique (9, 10).

Les plateaux de pré-distribution ainsi que les plateaux supports des lits catalytiques, sont habituellement percés de nombreux trous destinés à l'écoulement de la charge et du fluide réactif circulant à co-courant et comprennent, à l'identique du plateau à cheminées, une plus grosse ouverture ou « trou d'homme » obstruée en fonctionnement.

Comme son nom l'indique, ce trou d'homme quand il est ouvert permet entre autres choses, le libre passage d'un opérateur à l'intérieur du réacteur. Le réacteur (1) comprend également une ouverture supérieure (11) et une ouverture inférieure (12) pour l'entrée et la sortie des fluides. Ce réacteur (1) comprend trois lits catalytiques distincts (13, 14, 15) dont le lit supérieur est en cours de chargement (pluie de catalyseur en direction du lit non représentée) avec le dispositif (16) et le procédé objets de la présente invention ; le dispositif (16) étant en partie décrit dans FR 2 872 497. Le moyen de mesure de type sonar (17) du dispositif (16) est représenté actif sur la figure 1, c'est-à-dire que le sonar est en cours de mesure (18) de la hauteur du lit catalytique supérieur.

Le dispositif selon l'invention est susceptible de venir prendre place, par exemple sur un des plateaux de pré-distribution (6, 7 ou 8) au niveau du trou d'homme selon qu'il charge et constitue en grains de catalyseurs les lits (13, 14 ou 15), ou éventuellement sur l'ouverture supérieure 11 en cas de chargement au-dessus du plateau de pré-distribution supérieur.

En fonction des lits catalytiques à charger, le dispositif objet de la présente invention est introduit dans l'enceinte par l'intermédiaire de l'ouverture supérieure (11), ou des trous d'hommes, dont le diamètre est inférieur ou égal à 80 cm, notamment inférieur ou égal à 60 cm, voire inférieur ou égal à 50 cm.

Le chargement complet de l'enceinte catalytique (1) à l'aide du dispositif et du procédé objets de la présente invention peut être réalisé en trois étapes :
1/ chargement du lit inférieur avec le dispositif installé au niveau du trou d'homme localisé sur le plateau de pré-distribution (8),
2/ chargement du lit intermédiaire avec le dispositif installé comme ci-dessus sur le plateau (7),
3/ chargement du lit supérieur avec le dispositif installé sur le plateau de pré-distribution 6.

Chacun des lits catalytiques comprend en ses parties inférieure et supérieure des petits lits de billes inertes (19, 20, 21, 22, 23) constituées essentiellement d'alumine et sont destinés à retenir les grains de catalyseurs en partie inférieure du lit catalytique et d'effectuer une répartition de la charge dans sa partie supérieure. Le lit de billes inertes supérieur au lit catalytique (13) n'est pas représenté sur la présente figure 1 puisque ce dernier est en cours de chargement.

Le dispositif objet de la présente invention est initialement positionné à chacune des trois étapes décrites ci-dessus en faisant correspondre l'axe de son arbre de rotation (Z'Z) avec l'axe (X'X) de l'enceinte à charger.

Le dispositif objet de la présente invention comprend un moyen d'alimentation en particules solides (24), ici des grains de catalyseur, un moyen de dispersion constitué d'un arbre creux rotatif (25) équipé de ses déflecteurs, notamment de type lanière, et un moyen de mesure de la hauteur et/ou du profil du front de chargement (17) équipé de son moyen de liaison (37), qui peut être disposé totalement sous les déflecteurs (26), et plus exactement installé sous l'arbre creux fixe contenu à l'intérieur de l'arbre creux rotatif (25). Les déflecteurs (26) peuvent être attachés par des attaches flexibles.

Le moyen d'alimentation peut comporter :
- des obturateurs horizontaux dont l'ouverture et/ou la fermeture est (sont) commandée(s) à distance automatiquement par les vérins,
- des lumières latérales pouvant être recouvertes partiellement ou totalement par des obturateurs commandés automatiquement par les vérins,
- au moins un vérin pour commander le déplacement horizontal du dispositif, parallèlement à l'axe longitudinal du réacteur, d'une distance inférieure ou égale à 50 cm, ou de préférence inférieure ou égale à 20 cm, et/où
- un vérin permettant de faire varier l'axe de rotation du dispositif d'un angle inférieur à 45° et de préférence inférieur à 30° par rapport à l'axe longitudinal du réacteur.

Les vérins peuvent disposer d'un point fixe situé sur le réacteur pour fonctionner.

Les types de vérins équipant le dispositif sont connus dans l'art et devront pouvoir fonctionner dans une atmosphère poussiéreuse constituée essentiellement de particules solides, notamment de grains de catalyseurs.

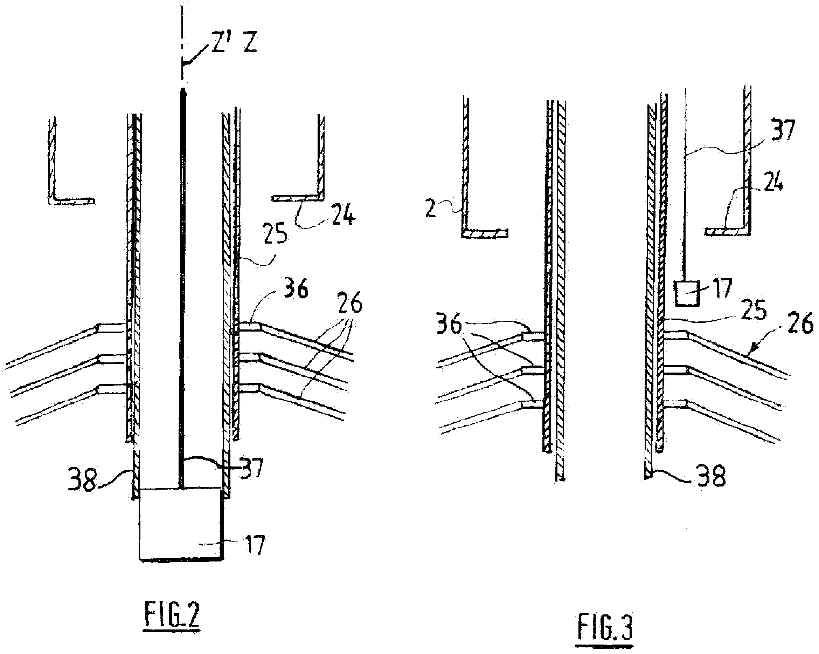

La figure 2 représente un mode de réalisation particulier du dispositif selon l'invention. Le moyen de dispersion des particules solides comprend un arbre de rotation (25) constitué d'un tube creux sur lequel des attaches (36) relient des déflecteurs flexibles (26), généralement constitués en une matière souple de type caoutchouc, au dit arbre de rotation (25).

L'arbre de rotation creux (25), comprend en son sein un tube creux fixe (38) fixe, solidaire du moyen d'alimentation (24) dans lequel est disposé le ou les moyen(s) de mesure (17) de la hauteur du lit de remplissage et/ou du profil de chargement.

Le moyen de mesure (17) peut comprendre au moins un moyen de liaison (37), par exemple en partie logé dans l'arbre creux fixe (38) comme indiqué sur la figure 2. Le moyen de liaison (37) peut permettre la communication entre le moyen de mesure (17) et des moyens de contrôle et de calcul, notamment un ordinateur. Il peut également être constitué de telle façon qu'il pourvoit au déplacement du moyen de mesure (17), en translation vertical et/ou en rotation.

Le moyen de mesure (17) peut comprendre un ou plusieurs dispositif(s) de mesure(s), par exemple une pluralité de radars et/ou de sonars, en particulier permettant des mesures de type instantanées de zones différentes sur le front de remplissage. Tout particulièrement le moyen de mesure se présente sous la forme d'une « boule à facettes » dont chacune des facettes est constituée par un dispositif de mesure, notamment un sonar ou un radar.

L'arbre de rotation creux (25) peut être pourvu d'orifices d'aspiration des poussières (non représentés) générées lors de l'impact des particules solides sur les déflecteurs (26).

La figure 3 représente un autre mode de réalisation dans lequel le moyen de dispersion des particules solides comprend un arbre creux (25) mobile en rotation sur lequel viennent se positionner des moyens de dispersion comprenant des attaches (36) reliant les déflecteurs flexibles (26) à l'arbre creux (25).

L'arbre creux rotatif (25) comprend en son sein un tube creux fixe (38) solidaire du moyen d'alimentation (24)

Le moyen de mesure (17) est porté par au moins un moyen de liaison (37) passant dans le tube d'alimentation (24). Ce moyen de mesure peut être logé dans le tube d'alimentation (24) et montés ou descendus, notamment en dessous des déflecteurs, lorsque ceux-ci sont immobiles, afin de prendre des mesures.

L'impact des déflecteurs en rotation sur la mesure des niveaux du lit catalytique ou du front de chargement, peut être préalablement considéré comme du bruit de fond de la mesure et soustrait à chacune desdites mesures.

Le diamètre intérieur du tube creux peut être inférieur ou égal à 200 mm, notamment inférieur ou égal à 180, en particulier inférieur ou égal à 160 mm, voire inférieure ou égale à 140 mm, et tout particulièrement inférieur ou égal à 130 mm.

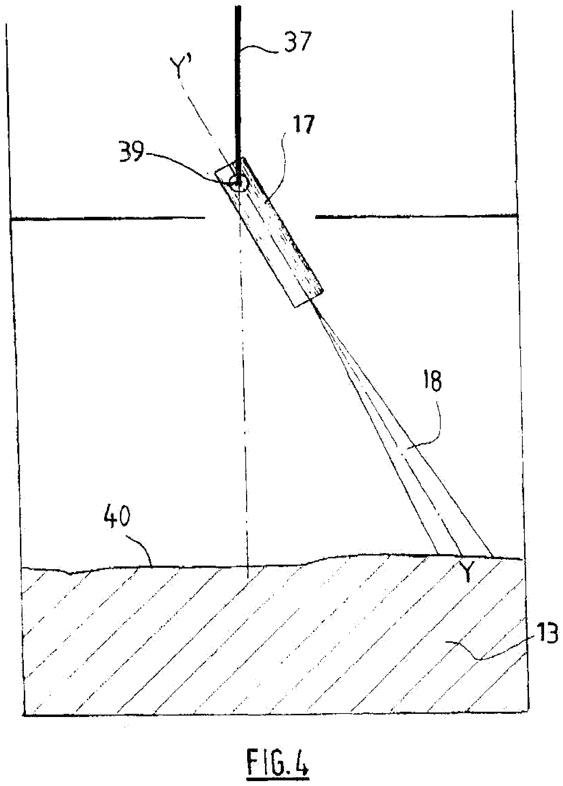

La figure 4 présente un montage particulier d'un moyen de mesure de type radar (17) disposé sur l'axe longitudinal X'X du réacteur à charger (non représenté) et monté sur un axe horizontal (39) autour duquel ledit moyen de mesure (17) peut pivoter à l'aide d'un moyen moteur angulaire équipant ledit moyen de mesure (17). Le moyen de mesure (17) étant disposé immédiatement sous le tube creux fixe (38).

L'axe horizontal est relié mécaniquement à un moyen de liaison (37) qui peut également assurer un mouvement de rotation autour de l'axe X'X. Ainsi le moyen de mesure (17), et plus exactement son faisceau de balayage (18), peut balayer la surface (40) suivant l'axe Y'Y du front de chargement du lit catalytique (13). Ceci est réalisé en faisant varier, par exemple de manières programmées, l'angle alpha et la vitesse de rotation autour de l'axe X'X, et donc en permettant d'effectuer des mesures du profil sur toute la surface (40) du front de remplissage du lit catalytique.

L'axe (Y'Y) du moyen de mesure (17) peut être positionné sur l'axe longitudinal (X'X) de l'enceinte à charger ou l'axe (Y'Y) du moyen de mesure (17) peut être différent de l'axe longitudinal (X'X) de l'enceinte à charger. Bien entendu, dans le cas où le moyen de mesure peut être déplacé en rotation, il peut à un moment être dans une position et à un autre moment être dans une autre position.

Selon une variante, le moyen de mesure (17) peut être solidaire du tube creux en rotation (25).

### EXEMPLE

Deux lits superposés de catalyseur sont à charger dans un réacteur chimique de type axial.

Chacun des deux lits mesure 8 mètres de haut et le diamètre du réacteur est de 4 mètres.

La charge d'hydrocarbures à traiter circule à co-courant dans le réacteur avec le gaz réactif, généralement de l'hydrogène seul ou en mélange.

Les 100 tonnes de catalyseur appelées à constituer le lit inférieur sont chargées avec un moyen de dispersion fonctionnant à effet de pluie et possédant un arbre creux rotatif portant des déflecteurs de type lanière.

Le lit supérieur (également 100 tonnes de catalyseur) est chargé avec un dispositif conforme à la présente invention comprenant le même moyen de dispersion que pour le lit inférieur. Le procédé de chargement tel que décrit dans le présent document est également appliqué au chargement du lit supérieur.

Dans les deux cas de chargement, l'axe de l'arbre creux rotatif est superposé à l'axe longitudinal du réacteur.

### 1/ chargement du lit inférieur

Afin de confirmer un chargement conforme du lit catalytique, à savoir par exemple une pente du front de chargement inférieure à 10° par rapport à l'horizontale, l'opérateur situé à l'intérieur du réacteur interrompt plusieurs fois ledit chargement (arrêt du moyen de dispersion) pendant l'opération. Plus précisément c'est par exemple à 15%, 30%, 50%, 70% et 90% de la quantité chargée que l'interruption se produit.

L'opérateur effectue alors à l'intérieur du réacteur, généralement dans une atmosphère hostile qui peut être poussiéreuse et également inertée à l'azote, plusieurs mesures de la hauteur du lit catalytique à l'aide d'un décamètre passé à travers les orifices du plateau de pré-distribution de la charge. Ensuite, un examen de la surface du lit est réalisé visuellement afin de modifier manuellement les réglages, notamment les moyens de fermeture du moyen d'alimentation pour corriger un éventuel défaut de planéité du front de chargement du lit catalytique.

Un opérateur expérimenté réalise la dizaine de mesures au décamètre et les mesures visuelles dans un temps qui est généralement d'une demi-heure. A cette durée d'immobilisation du moyen de dispersion, c'est-à-dire à la durée de l'arrêt du chargement, vient s'ajouter un éventuel démontage et remontage du moyen de dispersion pour le réglage des moyens de fermeture du moyen d'alimentation, opération dont la durée moyenne est d'environ une heure.

Sans compter le temps nécessaire pour des éventuels réglages des moyens de fermeture du moyen d'alimentation, et compte tenu du nombre d'arrêts évoqué ci-dessus pour un chargement conforme, le temps total d'immobilisation du moyen de dispersion pendant la phase de chargement est égal à 2h30 sur un temps total de 8h00 pour le chargement des 8 mètres du lit catalytique. C'est environ 30% du temps de chargement qui est consacré dans ce processus à la vérification du bon fonctionnement des moyens de dispersion et d'alimentation.

### 2/ Chargement du lit supérieur avec le dispositif et le procédé conformes à la présente invention

Le moyen d'alimentation étant équipé de moyens de fermeture commandés par des vérins automatisés, le moyen de dispersion étant également équipés de vérins automatisés afin de pouvoir faire varier sa position par rapport à l'axe longitudinal du réacteur à charger, le moyen de mesure étant du type sonar, les mesures de la hauteur du lit catalytique et du profil de chargement étant réalisées sans arrêt du moyen de dispersion, les corrections apportées aux différents moyens fonctionnels cités ci-dessus sont réalisées en temps réel et de manière automatique en fonction de l'analyse du ou des résultats des différentes mesures.

Plus précisément, le moyen de mesure utilisé dans la présente application est du type sonar, avec plusieurs sonars disposés régulièrement sur une demi-sphère disposée sous l'arbre creux du moyen de dispersion, ladite demi-sphère étant animée d'un mouvement de rotation autour de l'axe dudit arbre creux.

Le chargement n'a pas nécessité d'arrêt du moyen de dispersion pour d'éventuels contrôles manuels, la présence de l'opérateur dans l'atmosphère interne hostile du réacteur n'a plus été nécessaire, le temps de chargement a été réduit d'environ 30% par rapport au temps de chargement habituellement rencontré dans l'art.

De plus, la qualité de chargement a été augmentée par des contrôles et des actions correctrices en continu par rapport aux seulement 5 contrôles tels que décrits dans le présent exemple pour le chargement du lit catalytique inférieur du réacteur.

L'utilisation du dispositif et du procédé conformes à la présente invention pour un chargement d'un réacteur chimique avec des particules de catalyseur, permet de diminuer la durée du chargement d'environ un tiers, elle permet également de supprimer les interventions humaines dans des atmosphères hostiles, tout en améliorant la qualité dudit chargement.

C'est également pour le chargement en particules de catalyseur des réacteurs dits à « flux radial », notamment des réacteurs des unités de reformage des hydrocarbures que le dispositif et le procédé conformes à la présente invention trouvent leur pleine application.

## Revendications

1. Dispositif de chargement de particules solides dans une enceinte (2) comprenant :
- un moyen d'alimentation en particules (24),
- un moyen de dispersion des particules du haut vers le bas de l'enceinte (26), le moyen de dispersion (26) comprenant un tube creux fixe (38), installé à l'intérieur d'un arbre creux rotatif (25),
- plusieurs moyens de mesure (17) de la hauteur et/ou du profil du lit de remplissage (13) positionnés de façon à présenter des axes de mesure différents afin de mesurer simultanément le profil de plusieurs surfaces ou les hauteurs sur toute la surface du front de chargement, ces moyens de mesure étant pourvus d'au moins un moyen de déplacement leur permettant, par l'intermédiaire d'un moyen de liaison, d'être disposés à l'intérieur du tube creux fixe ou du moyen d'alimentation (24) et d'en sortir en partie ou totalement et
- au moins un système automatisé de contrôle du moyen d'alimentation (24) et/ou du moyen de dispersion (26).

2. Dispositif de chargement selon la revendication 1, **caractérisé en ce que** le moyen de mesure (17) de la hauteur du lit de remplissage implique des ondes électromagnétiques, notamment de type radar, et/ou des ondes acoustiques, plus particulièrement de type sonar.

3. Dispositif de chargement selon les revendications 1 et 2, **caractérisé en ce qu'**il comprend en outre, au moins un moyen de mesure du profil de chargement, en particulier un moyen de mesure du même type que le moyen de mesure (17) de la hauteur du lit de remplissage (13).

4. Dispositif de chargement selon la revendication 3, **caractérisé en ce que** le même moyen de mesure (17) permet la mesure de la hauteur du lit de remplissage et la mesure du profil de chargement.

5. Dispositif de chargement selon l'une quelconque des revendications 1 à 4, **caractérisé en ce que** plusieurs moyens de mesure (17) sont positionnés sur un rayon suivant une courbe notamment circulaire ou sont disposés selon une forme sphéroïdale ou cylindrique.

6. Dispositif de chargement selon l'une quelconque des revendications 3 à 5, **caractérisé en ce que** le moyen de mesure (17) du profil de chargement est constitué de plusieurs émetteurs-récepteurs disposés sur un demi-volume de sphère.

7. Dispositif de chargement selon l'une quelconque des revendications 1 à 6, **caractérisé en ce que** le moyen de mesure (17) est équipé d'un moyen moteur angulaire.

8. Dispositif de chargement selon la revendication 7, **caractérisé en ce que** l'angle de mesure déterminé entre l'axe (Y'Y) du moyen de mesure (17) et l'axe longitudinal (X'X) de l'enceinte à charger peut aller jusqu'à 30°, en particulier jusqu'à 45°, voire jusqu'à 60° et tout particulièrement jusqu'à 80°.

9. Dispositif de chargement selon l'une quelconque des revendications 1 à 8, **caractérisé en ce qu'**il comprend des moyens de comparaison des profils de chargements souhaité et mesuré, notamment ces moyens de comparaison sont mis en oeuvre par ordinateur.

10. Dispositif de chargement selon l'une quelconque des revendications 1 à 9, **caractérisé en ce qu'**il comprend un système automatisé de contrôle comprenant des vérins permettant notamment des actions automatisées de modifications des paramètres de réglages du moyen d'alimentation (24) et/ou du moyen de dispersion (26), en particulier selon les données des mesures de la hauteur et/ou de l'analyse du front de remplissage du lit catalytique en cours de chargement (13).

11. Dispositif de chargement selon l'une quelconque des revendications 1 à 10, **caractérisé en ce que** le moyen de mesure (17) est solidaire du tube creux en rotation (25).

12. Dispositif de chargement selon l'une des revendications 1 à 11, **caractérisé en ce qu'**il comprend au moins un moyen permettant au(x) moyen(s) de mesure (17) de la hauteur du lit de remplissage et/ou du profil de chargement d'effectuer une translation afin d'entrer et sortir du creux du tube fixe (38), notamment afin de prendre des mesures.

13. Procédé de chargement de particules solides dans une enceinte (2) avec un dispositif tel que décrit selon l'une quelconque des revendications 1 à 12, dans lequel :
- lesdites particules circulent du haut vers le bas,
- la hauteur du lit de particules et/ou le profil de chargement de plusieurs surfaces ou sur toute la surface du front de chargement sont mesurés simultanément, et
- les paramètres de chargement sont ajustés, notamment selon la mesure de hauteur du lit de remplissage, et/ou du profil de chargement.

14. Procédé de chargement selon la revendication 13, **caractérisé en ce que** ladite mesure nécessite l'arrêt du chargement pendant moins de 10 minutes, notamment moins de 5 minutes, en particulier moins d'une minute, et en particulier ne nécessite pas l'arrêt du chargement.

15. Procédé selon la revendication 13 ou 14, **caractérisé en ce que** les paramètres du moyen d'alimentation (24) et du moyen de dispersion (26) sont ajustés en fonction de la hauteur mesurée du lit de particules, et/ou du profil de chargement, par rapport à un modèle prenant en compte les caractéristiques géométriques intérieures de l'enceinte à charger (2).

16. Procédé selon l'une quelconque des revendications 13 à 15, **caractérisé en ce que** le moyen de mesure (17) du profil de chargement mesure la hauteur d'au moins 1 point pour chaque unité de surface représentant moins de 20 % et de préférence moins de 10 % de la surface totale.

17. Utilisation du dispositif tel que défini selon l'une quelconque des revendications 1 à 12 ou du procédé selon l'une quelconque des revendications 13 à 16, pour effectuer le chargement d'au moins un lit catalytique dans un réacteur chimique d'hydrotraitement des hydrocarbures.

18. Utilisation du dispositif tel que défini selon l'une quelconque des revendications 1 à 12 ou du procédé selon l'une quelconque des revendications 13 à 16, pour effectuer le chargement d'au moins un lit catalytique dans un réacteur chimique dit à « flux radial », notamment un réacteur d'une unité de reformage des hydrocarbures.

## Patentansprüche

1. Vorrichtung zum Laden von Festpartikeln in eine Kammer (2), die Folgendes umfasst:
- eine Partikelzuführeinrichtung (24)
- eine Verteilungseinrichtung (26) zum Verteilen der Partikel von oben nach unten in der Kammer, wobei die Verteilungseinrichtung (26) ein festes Hohlrohr (38) umfasst, das im Inneren einer drehbaren Hohlwelle (25) eingebaut ist,
- mehrere Messeinrichtungen (17) zum Messen der Höhe und/oder des Profils des Füllbetts (13), die so positioniert sind, dass sie unterschiedliche Messachsen aufweisen, um gleichzeitig das Profil von mehreren Flächen oder die Höhen auf der gesamten Fläche der Ladungsfront zu messen, wobei die Messeinrichtungen mit mindestens einer Verschiebungseinrichtung versehen sind, die es ihnen ermöglicht, mithilfe einer Verbindungseinrichtung im Inneren des festen Hohlrohrs oder der Zuführeinrichtung (24) angeordnet zu werden und von dort im Ganzen oder teilweise wieder heraus zu gelangen, und
- mindestens ein automatisiertes Steuersystem der Zuführeinrichtung (24) und/oder der Verteilungseinrichtung (26).

2. Vorrichtung zum Laden nach Anspruch 1, **dadurch gekennzeichnet, dass** die Messeinrichtung (17) zum Messen der Höhe des Füllbetts elektromagnetische Wellen, insbesondere Radarwellen, und/oder akustische Wellen, insbesondere Sonarwellen, einsetzt.

3. Vorrichtung zum Laden nach Anspruch 1 oder 2, **dadurch gekennzeichnet, dass** sie überdies mindestens eine Messeinrichtung zum Messen des Beladungsprofils umfasst, insbesondere eine Messeinrichtung derselben Art wie die Messeinrichtung (17) zum Messen der Höhe des Füllbetts (13).

4. Vorrichtung zum Laden nach Anspruch 3, **dadurch gekennzeichnet, dass** dieselbe Messeinrichtung (17) das Messen der Höhe des Füllbetts und das Messen des Beladungsprofils ermöglicht.

5. Vorrichtung zum Laden nach irgendeinem der Ansprüche 1 bis 4, **dadurch gekennzeichnet, dass** mehrere Messeinrichtungen (17) in einem Radius positioniert sind, der einer insbesondere kreisförmigen Kurve folgt, oder entlang einer kugelförmigen oder zylindrischen Form angeordnet sind.

6. Vorrichtung zum Laden nach irgendeinem der Ansprüche 3 bis 5, **dadurch gekennzeichnet, dass** die Messeinrichtung (17) zum Messen des Beladungsprofils mehrere Sende-Empfangs-Geräte umfasst, die über den Raum einer Halbkugel verteilt angeordnet sind.

7. Vorrichtung zum Laden nach irgendeinem der Ansprüche 1 bis 6, **dadurch gekennzeichnet, dass** die Messeinrichtung (17) mit einer Winkelmotoreinrichtung ausgestattet ist.

8. Vorrichtung zum Laden nach Anspruch 7, **dadurch gekennzeichnet, dass** der vorbestimmte Messwinkel zwischen der Achse (Y'Y) der Messeinrichtung (17) und der Längsachse (X'X) der zu beladenden Kammer bis zu 30°, insbesondere bis zu 45°, sogar bis zu 60° und insbesondere bis zu 80° betragen kann.

9. Vorrichtung zum Laden nach irgendeinem der Ansprüche 1 bis 8, **dadurch gekennzeichnet, dass** sie Einrichtungen zum Vergleichen von Soll- und Ist-Beladungsprofilen umfasst, insbesondere computergestützte Vergleichseinrichtungen.

10. Vorrichtung zum Laden nach irgendeinem der Ansprüche 1 bis 9, **dadurch gekennzeichnet, dass** sie ein automatisiertes Steuersystem umfasst, das Winden umfasst, die insbesondere automatisierte Veränderungen der Einstellparameter der Zuführeinrichtung (24) und/oder der Verteilungseinrichtung (26) ermöglichen, insbesondere entsprechend den ermittelten Daten der Höhenmessungen und/oder der im Verlauf der Beladung durchgeführten Analyse der Fülloberseite des katalytischen Betts (13).

11. Vorrichtung zum Laden nach irgendeinem der Ansprüche 1 bis 10, **dadurch gekennzeichnet, dass** die Messeinrichtung (17) kraftschlüssig mit dem sich drehenden Hohlrohr (25) verbunden ist.

12. Vorrichtung zum Laden nach einem der Ansprüche 1 bis 11, **dadurch gekennzeichnet, dass** sie mindestens eine Einrichtung umfasst, die es der/den Messeinrichtung(en) (17), die die Höhe des Füllbetts und/oder das Beladungsprofil ermittelt/ermitteln, ermöglicht, eine Translationsbewegung durchzuführen, um in das feste Hohlrohr (38) hinein und von dort heraus zu gelangen, insbesondere, um Messungen durchzuführen.

13. Verfahren zum Laden von Festpartikeln in eine Kammer (2) mit einer Vorrichtung nach irgendeinem der Ansprüche 1 bis 12, wobei:
- die Partikel sich von oben nach unten verteilen,
- die Höhe des Partikelbetts und/oder das Beladungsprofil von mehreren Flächen oder auf der gesamten Fläche der Ladungsfront gleichzeitig gemessen werden, und
- die Beladungsparameter angepasst werden, insbesondere gemäß der Messung der Höhe des Füllbetts und/oder des Beladungsprofils.

14. Verfahren zum Laden nach Anspruch 13, **dadurch gekennzeichnet, dass** für die Messung ein Beladungsstopp von weniger als 10 Minuten, insbesondere weniger als 5 Minuten, insbesondere weniger als einer Minute, und insbesondere kein Beladungsstopp nötig ist.

15. Verfahren nach Anspruch 13 oder 14, **dadurch gekennzeichnet, dass** die Parameter der Zuführeinrichtung (24) und der Verteilungseinrichtung (26) in Abhängigkeit von der gemessenen Höhe des Partikelbetts und/oder des Beladungsprofils in Bezug auf ein Modell, das die geometrischen Eigenschaften der zu beladenden Kammer (2) berücksichtigt, angepasst werden.

16. Verfahren nach irgendeinem der Ansprüche 13 bis 15, **dadurch gekennzeichnet, dass** die Messeinrichtung (17) des Beladungsprofils die Höhe von mindestens einem Punkt für jede Flächeneinheit misst, die weniger als 20 % und bevorzugt weniger als 10 % der Gesamtfläche beträgt.

17. Verwendung der Vorrichtung nach irgendeinem der Ansprüche 1 bis 12 oder des Verfahrens nach irgendeinem der Ansprüche 13 bis 16, zur Ladung mindestens eines katalytischen Betts in einen Chemie-Reaktor zur Wasserstoffbehandlung von Kohlenwasserstoffen.

18. Verwendung der Vorrichtung nach irgendeinem der Ansprüche 1 bis 12 oder des Verfahrens nach irgendeinem der Ansprüche 13 bis 16, zur Ladung mindestens eines katalytischen Betts in einen Chemie-Reaktor mit radialer Durchströmung, insbesondere einen Reaktor einer Baugruppe zum Reformieren von Kohlenwasserstoffen.

## Claims

1. Device for loading solid particles into a vessel (2) comprising:
- particle feed means (24);
- means (26) for dispersing the particles from the top to the bottom of the vessel, the dispersion means (26) comprising a fixed hollow tube (38), installed inside a rotating hollow shaft (25);
- several means (17) for measuring the height and/or the profile of the filling bed (13), positioned so as to present different measurement axis to simultaneously measure the profile of several surfaces or the heights over the entire surface of the loading front, these measurement means being provided with at least one displacement means that allows, via connection means, to be either positioned inside the fixed hollow tube or the feed means (24), and to partly or completely emerge therefrom; and
- at least one automated system for controlling the feed means (24) and/or the dispersion means (26).

2. Loading device according to Claim 1, **characterized in that** the means (17) for measuring the height of the filling bed involves electromagnetic waves, especially of radar type, and/or soundwaves, more particularly of sonar type.

3. Loading device according to Claims 1 and 2, **characterized in that** it also comprises at least one means for measuring the loading profile, in particular a measurement means of the same type as the means (17) for measuring the height of the filling bed (13).

4. Loading device according to Claim 3, **characterized in that** the same measurement means (17) allows the measurement of the height of the filling bed and the measurement of the loading profile.

5. Loading device according to any one of Claims 1 to 4, **characterized in that** several measurement means (17) are positioned over a radius of a curve, in particular of a circular curve or are positioned in a spheroidal or cylindrical shape.

6. Loading device according to any one of Claims 3 to 5, **characterized in that** the means (17) for measuring the loading profile is composed of several transceivers positioned in a hemisphere volume.

7. Loading device according to any one of Claims 1 to 6, **characterized in that** the measurement means (17) is equipped with angular motor means.

8. Loading device according to Claim 7, **characterized in that** the measurement angle determined between the axis (Y'Y) of the measurement means (17) and the longitudinal axis (X'X) of the vessel to be loaded may range up to 30°, in particular up to 45°, or even up to 60° and most particularly up to 80°.

9. Loading device according to any one of Claims 1 to 8, **characterized in that** it comprises means for comparing the desired and measured loading profiles, in particular these comparison means are computer implemented.

10. Loading device according to any one of Claims 1 to 9, **characterized in that** it comprises an automated control system comprising jacks allowing, in particular, automated actions for modifications of the adjustment parameters of the feed means (24) and/or of the dispersion means (26), in particular according to the data from the measurements of the height and/or from the analysis of the filling front of the catalyst bed (13) during loading.

11. Loading device according to any one of Claims 1 to 10, **characterized in that** the measurement means (17) is firmly attached to the rotating hollow tube (25).

12. Loading device according to any one of claims 1 to 11, **characterized in that** it comprises at least one means enabling the means (17) for measuring the height of the filling bed and/or of the loading profile to carry out a translation in order to enter into and exit from the hollow of the fixed tube (38), especially in order to take measurements.

13. Process for loading solid particles into a vessel (2) with a device as described according to any one of Claims 1 to 12, in which:
- said particles flow from the top to the bottom;
- the height of the particle bed and/or the loading profile of several surfaces or over the entire surface of the loading front are measured simultaneously; and
- the loading parameters are adjusted, especially according to the measurement of the height of the filling bed, and/or of the loading profile.

14. Loading process according to Claim 13, **characterized in that** said measurement requires that loading be stopped for less than 10 minutes, especially less than 5 minutes, in particular less than 1 minute, and in particular does not require loading to be stopped.

15. Process according to Claim 13 or 14, **characterized in that** the parameters of the feed means (24) and of the dispersion means (26) are adjusted as a function of the measured height of the particle bed, and/or of the loading profile, relative to a model that takes into account the internal geometric features of the vessel to be loaded (2).

16. Process according to any one of Claims 13 to 15, **characterized in that** the means (17) for measuring the loading profile measures the height of at least one point for each unit of surface area representing less than 20% and preferably less than 10% of the total surface area.

17. Use of the device as defined according to any one of Claims 1 to 12 or of the process according to any one of Claims 13 to 16, for carrying out the loading of at least one catalyst bed in a chemical reactor for the hydrotreatment of hydrocarbons.

18. Use of the device as defined according to any one of Claims 1 to 12 or of the process according to any one of Claims 13 to 16, for carrying out the loading of at least one catalyst bed in a chemical reactor known as a "radial flow" chemical reactor, especially a reactor of a unit for reforming hydrocarbons.
